# EUROPEAN PATENT APPLICATION

(11) **EP 4 746 006 A1**
(43) Date of publication of application: **20.05.2026**
(21) Application number: 25177923.7
(22) Date of filing: 21.05.2025
(51) Int. Cl.: H01F 27/00, F16F 15/067, H01F 27/06, H01F 27/12

(54) **TRANSFORMER BODY POSITIONING STRUCTURE AND TRANSFORMER**

(30) Priority: 18.11.2024 CN 202411647808
(71) Applicant: ZTT Transformer Co., Ltd., Yancheng, Jiangsu 224002 (CN); Jiangsu Zhongtian Technology Co., Ltd., Nantong, Jiangsu 226463 (CN)
(72) Inventor: SONG, Jiachun, Nantong, 226463 (CN); XU, Zhuya, Nantong, 226463 (CN); GU, Haifeng, Nantong, 226463 (CN); XU, Ping, Nantong, 226463 (CN); ZHANG, Menghe, Nantong, 226463 (CN); GAO, Jinsen, Nantong, 226463 (CN)
(74) Representative: Metida

(57) **Abstract**

A transformer body positioning structure and a transformer are disclosed. The transformer body positioning structure includes an upper positioning assembly and a lower positioning assembly. The upper positioning assembly includes a positioning insert plate having an inclined portion and a support plate having a positioning slot. The positioning insert plate is inserted into the slot, and due to the presence of the inclined portion, the transformer body moves toward the center of the oil tank during the descending process. The lower positioning assembly includes a main spring, a secondary spring, a shock-absorbing pad, a positioning pin and a positioning ring. The top of the positioning ring is cone-shaped. The main spring, secondary spring and shock-absorbing pad have shock-absorbing effects that can protect the transformer body. The top of the positioning pin is conical, and the positioning ring has a conical groove matching with the positioning pin.

## Description

### FIELD

The present disclosure relates to field of transformers, and in particular to a transformer body positioning structure and a transformer.

### BACKGROUND

Transformers are major power distribution equipment in power systems. Oil-immersed transformers are transformers installed in oil tanks filled with oil liquid. When installing a transformer, the positioning of the transformer body is very important. When the transformer body is not properly positioned, during transportation and handling, the transformer body may shift and collide with the oil tank, causing damage to the transformer or oil tank, resulting in transformer failure.

Existing transformer body positioning structures, while having guiding functions, require workers to observe through the gap between the oil tank cover and the oil tank body when placing the transformer body in the oil tank. This is to ensure that the transformer body does not tilt and hit the oil tank during the lowering process, or the guiding function completes the guidance of lowering the transformer body. Since an existing oil tank height exceeds 1 meter, workers may not be able to properly observe the lower positioning structure, therefore, during the descending process, constant manual adjustment of the transformer body position is required, which is time-consuming, inefficient, and may pose risks during manual intervention. During long-distance transportation or on bumpy roads, vibrations may occur, which cannot properly protect the transformer body. In existing positioning structures, an interference fit is formed between a positioning ring and a foot hole of the transformer, installation into the body foot hole is inconvenient and requires a long time to complete assembly.

Thus, there is room for improvement within the prior art.

### SUMMARY

In view of this, the object of the present application is to provide a transformer body positioning structure and a transformer.

In some embodiments of the application, the transformer body positioning structure includes:

an upper positioning assembly, arranged at an upper portion of an oil tank for placing a transformer body, including support plates and positioning insert plates, each of the support plates is arranged at a corner formed by adjacent two side surfaces of the oil tank, and each of the support plates is arranged at an end of the adjacent two side surfaces close to an opening end of the oil tank, a positioning slot is defined in each of the support plate, the positioning insert plates are arranged on an oil tank cover, each of the positioning insert plate includes a connection portion arranged at an upper end of the positioning insert plate and an inclined portion arranged at a lower end of the positioning insert plate, the connection portion includes a shape matching with the positioning slot, a gap is formed between the connection portion and the positioning slot, and the inclined portion forms a slope where a cross-sectional dimension gradually increases from a lower end toward the connection portion;

one or more lower positioning assembly, arranged at a lower portion of the oil tank and matching with a body foot of the transformer body, wherein a foot hole is defined on the body foot, the lower positioning assembly includes a base plate, a positioning pin, a middle plate, a top plate, a shock-absorbing pad, a positioning ring, at least one secondary spring, and a main spring, the base plate is arranged at a bottom of the oil tank, the positioning pin is arranged on the base plate, the positioning pin passes through the middle plate, the top plate, and the shock-absorbing pad, the main spring is sleeved on the positioning pin, one end of the main spring is connected to the base plate, and another end of the main spring is connected to the top plate, the at least one secondary spring is arranged between the middle plate and the top plate, the shock-absorbing pad is arranged on the top plate, the shock-absorbing pad is arranged below the body foot, the positioning ring is sleeved on a top portion of the positioning pin, the top portion of the positioning pin is conical, a conical groove matching with the top portion of the positioning pin is defined inside the positioning ring, a top portion of the positioning ring is cone-shaped, and the positioning pin and the positioning ring pass through the foot hole.

In some embodiments, the support plates include four support plates, the four support plates are respectively installed at four corners formed by the adjacent two side surfaces of the oil tank.

In some embodiments, the positioning slot defined in the support plate is a rectangular slot, the connection portion is configured to be rectangular matching with the positioning slot, the inclined portion includes four inclined faces, and the four inclined faces respectively extend from a lower end of the inclined portion to the connection portion.

In some embodiments, the gap between the positioning slot and the connection portion is 5mm.

In some embodiments, a distance between each of the support plate and a top end of corresponding side surface of the oil tank is 60mm-80mm.

In some embodiments, the lower positioning assemblies are arranged at both ends of the body foot.

In some embodiments, the lower positioning assembly further includes a center column and at least one bolt, a first center hole is defined in the base plate, the positioning pin is installed in the first center hole, the center column is sleeved outside the main spring, one end of the center column is connected to the base plate, another end of the center column is connected to the middle plate, a second center hole and at least one first connection hole are formed in the middle plate, the second center hole allows the positioning pin and the main spring to pass through, a third center hole and at least one second connection hole are defined in the top plate, the positioning pin passes through the third center hole, one end of the at least one bolt is arranged in the at least one second connection hole and another end of the at least one bolt passes through the at least one first connection hole, and the at least one secondary spring is sleeved on the at least one bolt.

In some embodiments, the at least one first connection hole in the middle plate includes four first connection holes, each first connection hole corresponds to one bolt passing through, and each of the at least one secondary spring is sleeved on each bolt.

In some embodiments, the lower positioning assembly further includes a nut and a washer, the nut matches with a portion of the corresponding bolt extending out of a lower end face of the middle plate, and the washer is arranged between the nut and the lower end face of the middle plate.

In some embodiments, a transformer is provided, including the transformer body positioning structure as described above.

The beneficial effects achieved by the present application:

By providing an upper positioning assembly including a support plate and a positioning insert plate, where the support plate has a slot for inserting the positioning insert plate, and the positioning insert plate has a connection portion at the upper end and an inclined portion at the lower end, with the cross-sectional dimension of the inclined portion gradually increasing from the lowermost end toward the connection portion, when the transformer body descends inside the oil tank, under the action of the inclined portion and gravity, position of the transformer body will continuously shift, approaching the center position of the oil tank. When the transformer body descends close to the bottom of the oil tank, the positioning ring of the lower positioning assembly begins to enter the body foot hole. The top of the positioning ring is cone-shaped, which further corrects the position of the transformer body, ensuring correct installation of the transformer body, making the entire descending process fast, efficient, and highly accurate, without requiring excessive manual intervention in the transformer body descending position.

By arranging the secondary spring between the middle plate and top plate, the main spring between the base plate and top plate, and the shock-absorbing pad, shock absorption is provided, which can protect the transformer body. Meanwhile, by arranging the main spring and multiple secondary springs, good shock absorption can still be maintained even if some springs fail. Additionally, a shock-absorbing pad is arranged between the top plate and the foot to prevent collision between the foot and the top plate.

By arranging the positioning pin with a positioning ring fitted over its top, where the top of the positioning pin is conical and the positioning ring has an internal conical groove matching with the top of the positioning pin, when the transformer body descends and the positioning ring enters the foot hole, under the weight of the transformer body, the positioning ring descends along the top portion of the positioning pin, the conical top of the positioning pin expands the conical groove of the positioning ring, causing the outer diameter of the positioning ring to gradually expand and tightly engage with the foot hole.

To make the above objects, features and advantages of the present application more clear and easy to understand, preferred embodiments will be described in detail below with reference to the accompanying drawings.

### BRIEF DESCRIPTION OF THE DRAWINGS

Many aspects of the disclosure can be better understood with reference to the following drawings. The drawings in the following description are some embodiments of the present disclosure. For those of ordinary skill in the art, other drawings can be obtained based on these drawings without creative work.
FIG. 1 shows a front view of a transformer body installed in an oil tank according to the present application;
FIG. 2 shows a side view of the transformer body installed in the oil tank according to the present application;
FIG. 3 shows a top view of the transformer body installed in the oil tank according to the present application;
FIG. 4 shows a structural diagram of an upper positioning assembly according to the present application;
FIG. 5 shows a structural diagram of a support plate according to the present application;
FIG. 6 shows a structural diagram of a positioning insert plate according to the present application;
FIG. 7 shows a structural diagram of a lower positioning assembly according to the present application;
FIG. 8 shows a cross-sectional diagram of the lower positioning assembly according to the present application;
FIG. 9 shows a structural diagram of the lower positioning assembly in another direction according to the present application.

### DETAILED DESCRIPTION

In order to make the above-mentioned objects, features and advantages of the present application more obvious, a detailed description of specific embodiments of the present application will be described in detail with reference to the accompanying drawings. A number of details are set forth in the following description so as to fully understand the present application. However, the present application can be implemented in many other ways different from those described herein, and those skilled in the art can make similar improvements without violating the contents of the present application. Therefore, the present application is not to be considered as limiting the scope of the embodiments described herein.

Several definitions that apply throughout this disclosure will now be presented.

The term "coupled" is defined as coupled, whether directly or indirectly through intervening components, and is not necessarily limited to physical connections. The connection may be such that the objects are permanently coupled or releasably coupled. The term "substantially" is defined to be essentially conforming to the particular dimension, shape, or other feature that the term modifies, such that the component need not have that exact feature. The term "comprising," when utilized, means "including, but not necessarily limited to"; it in one embodiment indicates open-ended inclusion or membership in the so-described combination, group, series, and the like.

In oil-immersed transformers, the transformer body needs to be installed inside the oil tank. To ensure proper positioning of the transformer body within the oil tank, a positioning structure is designed. The transformer body is hoisted into the oil tank using lifting hooks, and during the process of lowering the transformer body into the oil tank and connecting the transformer body to the positioning structure, manual adjustments are continuously required to align the transformer body correctly.

Existing positioning structures for transformer bodies, while providing some guiding functionality, still require workers to observe through the gap between a tank cover and a tank body during installation, to prevent the transformer body form tilting or colliding with the oil tank during the lowering process, and to guide mechanism properly directs the descent. Additionally, during long-distance transportation or on bumpy roads, vibrations may occur, which cannot properly protect the transformer body.

The following will describe technical solutions of embodiments of the present application clearly and comprehensively in conjunction with the accompanying drawings. It is evident that the described embodiments are only a part of the embodiments of the present application and not all of them. Based on the embodiments of the present application, all other embodiments obtained by those of ordinary skill in the art without creative effort shall fall within the scope of protection of the present application.

Unless otherwise defined, all technical and scientific terms used herein have the same meaning as commonly understood by one skilled in the art. The terms used in the specification of the present application herein are only for describing specific embodiments and are not intended to limit the present application. The terms "and/or" used herein includes any and all combinations of one or more of associated listed items.

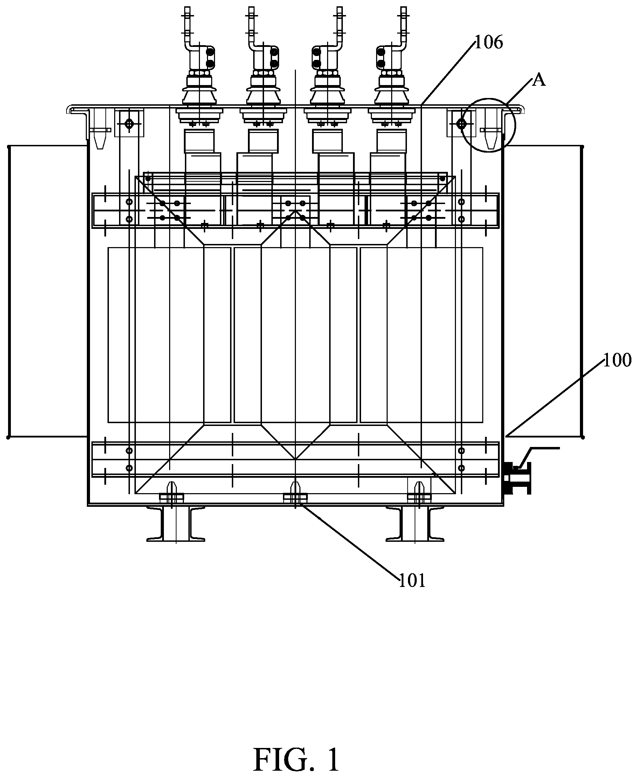

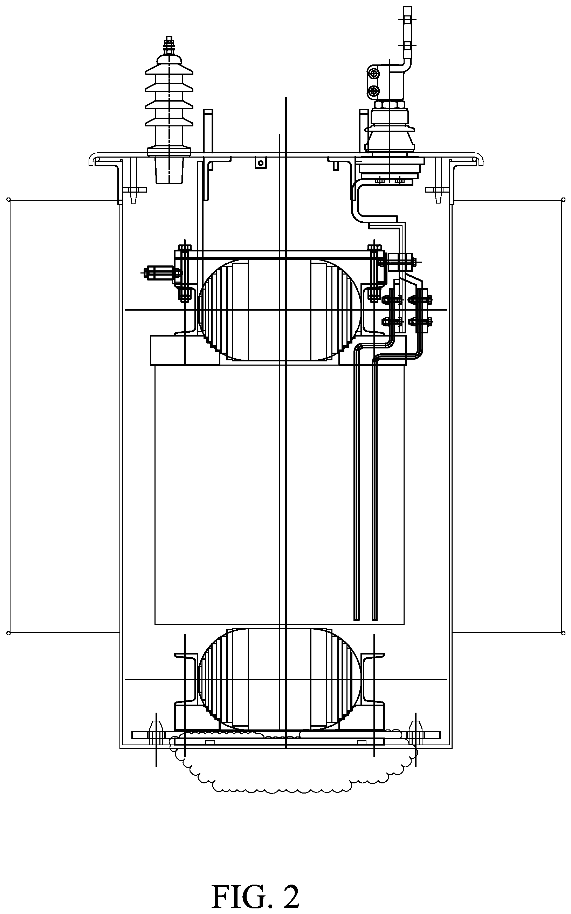

As shown in FIG. 1 to FIG. 3, an oil-immersed transformer is installed in an oil tank 100 filled with oil liquid. The oil tank 100 includes a bottom 101, a first side surface 102, a second side surface 103, a third side surface 104, and a fourth side surface 105. The first side surface 102, the second side surface 103, the third side surface 104, and the fourth side surface 105 are respectively connected to four sides of the bottom 101. The first side surface 102, second side surface 103, third side surface 104, and fourth side surface 105 are adjacently sealed to form a rectangular cavity for containing oil liquid and the transformer body. An oil tank cover 106 is arranged at the top of the cavity.

The transformer body is installed on a body fixing mechanism, the body fixing mechanism is fixed to the oil tank cover 106 through a connection structure. A lifting plate is arranged on the oil tank cover 106, and a crane hook is configured to hook the lifting plate to lift the oil tank cover 106, achieving the lifting of the entire transformer body, thereby enabling the transformer body to be hoisted into the oil tank 100 through the crane hook for positioning and installation, facilitating subsequent transportation and use.

An upper positioning assembly is arranged at an upper portion of the oil tank 100, the upper positioning assembly includes support plates 20 and positioning insert plates 30.

The support plates 20 are arranged at a corner where the first side surface 102 and second side surface 103 connect, at a corner where the second side surface 103 and third side surface 104 connect, at a corner where the third side surface 104 and fourth side surface 105 connect, and at a corner where the fourth side surface 105 and first side surface 102 connect. The support plates 20 are arranged at an end of each side surface close to an opening end at a top portion of the cavity. A distance between each support plate 20 and a top end of corresponding side surface is 60mm-80mm. A positioning slot 21 is defined in each support plate 20.

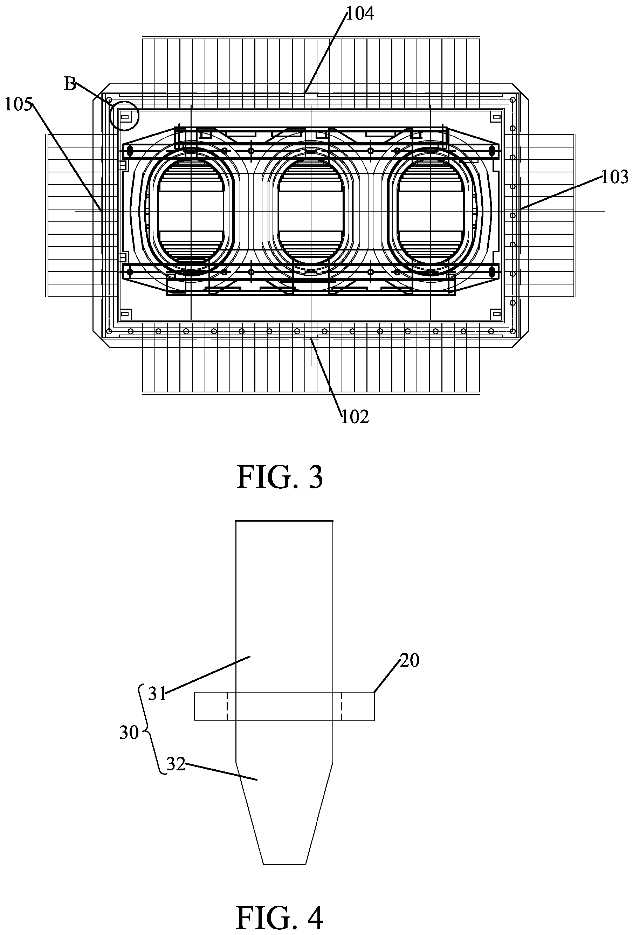

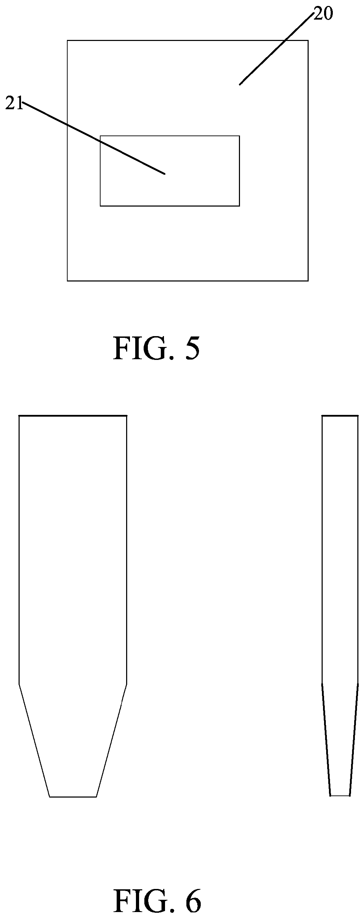

The positioning insert plates 30 are arranged at a side of the oil tank cover 106 facing the cavity of the oil tank 100. In one embodiment, the positioning insert plates 30 are weld to the oil tank cover 106. As shown in FIG. 4 to FIG. 6, each of the positioning insert plates 30 includes a connection portion 31 at an upper end of the positioning insert plate 30 and an inclined portion 32 at a lower end of the positioning insert plate 30. The connection portion 31 is rectangular, matching with the positioning slot 21, a gap is formed between long and short edges of the connection portion 31 and the positioning slot 21. In one embodiment, a size of the gap is 5mm or any other spacing that meets the installation requirements. During descending process of the transformer body, to prevent collision between the transformer body and oil tank and for positioning, manual observation and adjustment of the descending position is needed. When the oil tank cover 106 is about to cover the top of the cavity, manual observation of the transformer body's movement inside the oil tank becomes difficult, requiring workers to insert their heads into a gap between the oil tank cover 106 and the oil tank side surfaces. As the transformer body further descends, the gap between the oil tank cover 106 and oil tank side surfaces becomes insufficient for workers, and when the gap is too small, it may be dangerous for workers to insert their heads under the oil tank cover 106 for observation.

In one embodiment, the positioning slot 21 is a rectangular slot, the connection portion 31 is configured to be rectangular matching with the positioning slot 21. the inclined portion 32 includes four inclined faces, and the four inclined faces respectively extend from a lower end of the inclined portion 32 to the connection portion 31.

In the present application, each of the support plates 20 is 70mm-100mm from the top end of each side surface. Before the positioning insert plate 30 descends to insert into the support plate 20, the distance between the oil tank cover 106 and each side surface allows for manual observation. When the oil tank cover 106 descends until the inclined portion 32 of the positioning insert plate 30 begins to insert into the positioning slot 21, the descending of the transformer body inside the oil tank 100 is guided by the upper positioning assembly formed by the support plates 20 and positioning insert plates 30. As the transformer body continues to descend, the connection portion 31 inserts into the positioning slot 21. During the transformer body's descent, under the action of the inclined portions 32, positioning slots 21, and gravity of the transformer body, the position of the transformer body will continuously approach a center position of the oil tank. Position deviation of the transformer body during descending process only caused by the gap between the positioning slot 21 and connection portion 31.

In some embodiments, the positioning slot 21 may also be of other shapes, such as square or circular. The positioning insert plate 30 would be of a matching shape.

One or more lower positioning assembly is further arranged at a bottom of the oil tank, the lower positioning assembly includes a base plate 40, a middle plate 50, a top plate 60, a center column 70, a positioning pin 80, a positioning ring 81, a shock-absorbing pad 90, a main spring 91, a secondary spring 92, at least one bolt 53, a nut 54, and a washer 55.

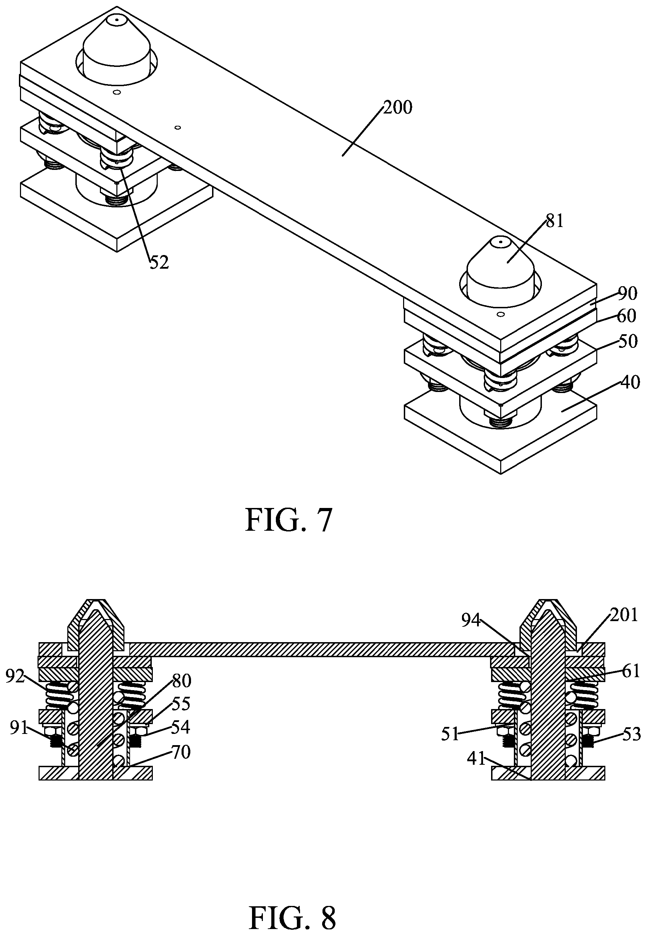

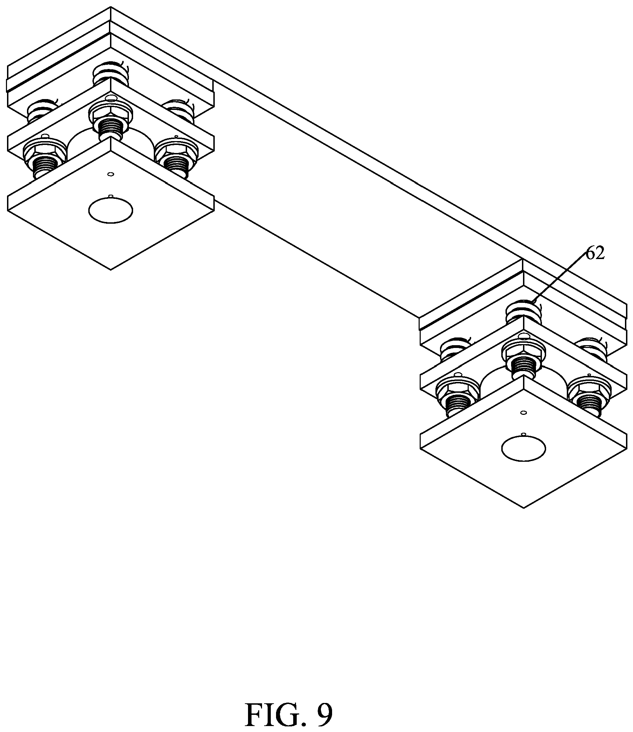

As shown in FIG. 1 to FIG. 9, the base plate 40 is welded to the bottom 101 of the oil tank. A first center hole 41 is defined in the base plate 40. The positioning pin 80 is arranged in the first center hole 41. The main spring 91 is sleeved on the positioning pin 80. An end of the main spring 91 is connected to the base plate 40, and another end of the main spring 91 is connected to the top plate 60. The main spring 91 provides shock absorption after the transformer body coupled with the lower positioning assembly, protecting the transformer body from damage during transportation and handling. The center column 70 is a hollow tubular column, and the center column 70 is sleeved outside the main spring 91. A lower end of the center column 70 is connected to the base plate 40, and an upper end of the center column 70 is connected to the middle plate 50.

A second center hole 51 and at least one first connection hole 52 are defined on the middle plate 50. The upper end of the center column 70 connects to an inner wall of the second center hole 51, the positioning pin 80 and main spring 91 pass through the second center hole 51. The bolt 53 passes through the first connection hole 52, two ends of the bolt 53 extends out of the first connection hole 52. The nut 54 is installed on an end of the bolt 53 at a lower end face of the middle plate 50. The washer 55 is between the nut 54 and the middle plate 50. The bolt 53 is fixed to the middle plate 50 through the nut 54 and the washer 55. There are four first connection holes 52 arranged at the four corners of the middle plate 50. Four bolts 53 passes through four first connection holes 52 and connects to the top plate 60. A third center hole 61 and at least one second connection holes 62 are defined on the top plate 60. Ends of the four bolts 53 inserted into their corresponding second connection holes 62. The secondary springs 92 is sleeved on the bolt 53, and quantity of the secondary springs 92 is four. The addition of secondary springs 92 to the main spring 91 provides better shock absorption, and even if the main spring 91 or some secondary springs 92 fail, the shock absorption effect of the lower positioning assembly can still be maintained, preventing damage to the transformer body from vibration during transportation or handling.

The shock-absorbing pad 90 is arranged on the top plate 60. The positioning pin 80 passes through the third center hole 61 and a fourth center hole 94 machined in the shock-absorbing pad 90. The positioning ring 81 is fitted over the positioning pin 80. A top end of the positioning pin 80 is conical. The positioning ring 81 includes an internal conical groove 82 matching with the conical top end of the positioning pin 80. The positioning ring 81 is fitted with the top end of the positioning pin 80 through the conical groove 82. The top portion of the positioning ring 81 is cone-shaped.

The transformer body foot 200 defines at least one foot hole 201. Quantity of the foot hole 201 corresponds to quantity of the positioning assembly. When the transformer body descends close to the lower positioning assembly, the positioning ring 81 of the lower positioning assembly first enters the foot hole 201. As the transformer body continues to descend, the foot 200 finally rests on the shock-absorbing pad 90. The shock-absorbing pad 90 is arranged between the top plate 60 and the body foot 200 to prevent direct contact and collision between the body foot 200 and the top plate 60 and bolts 53, which could damage the transformer body. After the positioning ring 81 enters the foot hole 201, during the downward movement of the transformer body, under the gravity of the transformer body, the positioning ring 81 slides down and tightens along the top portion of the positioning pin 80. The positioning ring 81 is expanded by the conical top of the positioning pin 80, and the positioning ring 81 is compressed downward and deforming to make tight contact with inner surface of the foot hole 201 for transformer body positioning. During the transformer body's descent, the cone-shaped top portion of the positioning ring 81 can further correct the transformer body position, ensuring installation accuracy.

Therefore, in the application, when manual observation becomes inconvenient, the upper positioning assembly and lower positioning assembly can ensure the accuracy of the transformer body's descending position.

Lower positioning assemblies are arranged at both ends of the transformer body foot 200, forming a pair of lower positioning assemblies. Three pairs of lower positioning assemblies are evenly arranged on the bottom 101 of the oil tank, ensuring uniform positioning and support of the transformer body.

In one embodiment, installation process of the transformer body is as follows:
Step 1: Mount the transformer body to the transformer body fixing mechanism, then connect the fixing mechanism to the oil tank cover 106 through the connection structure, and then use the crane hook to hook the lifting plate on the oil tank cover 106, beginning to install the transformer body into the oil tank 100.
Step 2: Slowly lower the transformer body inside the oil tank 100. After descending to a preset height, align the inclined portion 32 of the positioning insert plate 30 arranged on the oil tank cover 106 with the positioning slot 21 in the support plate 20 arranged at the corner of adjacent two side surfaces of the oil tank 100, then continue descending the transformer body slowly. Under the action of the slope of the inclined portion 32 and the gravity of the transformer body, the position of the transformer body continuously approaches the center position of the oil tank.
Step 3: When the transformer body descends to a certain distance from the bottom 101 of the oil tank, for example, when the distance from the bottom 101 of the oil tank is 30mm (this distance depends on a height of the lower positioning assembly), the positioning ring 81 and positioning pin 80 of the lower positioning assembly begin to insert into the foot hole 201 of the transformer body foot 200. Since the top of the positioning ring 81 is cone-shaped, the positioning ring 81 can further correct the position of the transformer body during the further lowering process, until the transformer body is completely placed on the lower positioning assembly.

During the installation process of the transformer body, through the arrangement of the upper positioning assembly and lower positioning assembly, with the inclined portion on the upper positioning assembly and the cone-shaped top portion of the positioning ring on the lower positioning assembly, the present application enables the entire descending process without requiring excessive manual intervention in the descending position, achieving high efficiency and accuracy in transformer body descending process. The lower positioning assembly further includes main spring, secondary springs, and shock-absorbing pad, providing shock absorption and protection for the transformer body.

The present application further discloses a transformer, the transformer is installed in the oil tank to form an oil-immersed transformer. When installing the transformer in the oil tank 100, the above-mentioned upper positioning assembly and lower positioning assembly are used for positioning, making the transformer installation process quick and efficient. Meanwhile, the lower positioning assembly protects the transformer body, reducing the impact of vibration during transportation and handling, preventing vibration damage to the transformer.

## Claims

1. A transformer body positioning structure, **characterized in that** it comprises:
an upper positioning assembly, arranged at an upper portion of an oil tank for placing a transformer body, comprising support plates and positioning insert plates, wherein each of the support plates is arranged at a corner formed by adj acent two side surfaces of the oil tank, and each of the support plates is arranged at an end of the adjacent two side surfaces close to an opening end of the oil tank, a positioning slot is defined in each of the support plate, the positioning insert plates are arranged on an oil tank cover, each of the positioning insert plate comprises a connection portion arranged at an upper end of the positioning insert plate and an inclined portion arranged at a lower end of the positioning insert plate, the connection portion comprises a shape matching with the positioning slot, a gap is formed between the connection portion and the positioning slot, and the inclined portion forms a slope where a cross-sectional dimension gradually increases from a lower end toward the connection portion;
one or more lower positioning assembly, arranged at a lower portion of the oil tank and matching with a body foot of the transformer body, wherein a foot hole is defined on the body foot, the lower positioning assembly comprises a base plate, a positioning pin, a middle plate, a top plate, a shock-absorbing pad, a positioning ring, at least one secondary spring, and a main spring, the base plate is arranged at a bottom of the oil tank, the positioning pin is arranged on the base plate, the positioning pin passes through the middle plate, the top plate, and the shock-absorbing pad, the main spring is sleeved on the positioning pin, one end of the main spring is connected to the base plate, and another end of the main spring is connected to the top plate, the at least one secondary spring is arranged between the middle plate and the top plate, the shock-absorbing pad is arranged on the top plate, the shock-absorbing pad is arranged below the body foot, the positioning ring is sleeved on a top portion of the positioning pin, the top portion of the positioning pin is conical, a conical groove matching with the top portion of the positioning pin is defined inside the positioning ring, a top portion of the positioning ring is cone-shaped, and the positioning pin and the positioning ring pass through the foot hole.

2. The transformer body positioning structure according to claim 1, wherein the support plates comprise four support plates, the four support plates are respectively installed at four corners formed by the adjacent two side surfaces of the oil tank.

3. The transformer body positioning structure according to claim **1,** wherein the positioning slot defined in the support plate is a rectangular slot, the connection portion is configured to be rectangular matching with the positioning slot, the inclined portion comprises four inclined faces, and the four inclined faces respectively extend from a lower end of the inclined portion to the connection portion.

4. The transformer body positioning structure according to claim 3, wherein the gap between the positioning slot and the connection portion is 5mm.

5. The transformer body positioning structure according to claim 1, wherein a distance between each of the support plate and a top end of corresponding side surface of the oil tank is 60mm-80mm.

6. The transformer body positioning structure according to claim 1, wherein the lower positioning assemblies are arranged at both ends of the body foot.

7. The transformer body positioning structure according to claim 1, wherein the lower positioning assembly further comprises a center column and at least one bolt, a first center hole is defined in the base plate, the positioning pin is installed in the first center hole, the center column is sleeved outside the main spring, one end of the center column is connected to the base plate, another end of the center column is connected to the middle plate, a second center hole and at least one first connection hole are formed in the middle plate, the second center hole allows the positioning pin and the main spring to pass through, a third center hole and at least one second connection hole are defined in the top plate, the positioning pin passes through the third center hole, one end of the at least one bolt is arranged in the at least one second connection hole and another end of the at least one bolt passes through the at least one first connection hole, and the at least one secondary spring is sleeved on the at least one bolt.

8. The transformer body positioning structure according to claim 7, wherein the at least one first connection hole in the middle plate comprises four first connection holes, each first connection hole corresponds to one bolt passing through, and each of the at least one secondary spring is sleeved on each bolt.

9. The transformer body positioning structure according to claim 7, wherein the lower positioning assembly further comprises a nut and a washer, the nut matches with a portion of the corresponding bolt extending out of a lower end face of the middle plate, and the washer is arranged between the nut and the lower end face of the middle plate.

10. A transformer, **characterized in that** it comprises the transformer body positioning structure according to any one of claims 1-9.

## Amended claims

### Amended claims in accordance with Rule 137(2) EPC.

1. A transformer body positioning structure, **characterized in that**, the transformer body mounts to a transformer body fixing mechanism , the transformer body positioning structure comprising:
an upper positioning assembly, arranged at an upper portion of an oil tank(100) for placing a transformer body, comprising support plates(20) and positioning insert plates(30),
wherein each of the support plates(20) is arranged at a corner formed by adjacent two side surfaces of the oil tank(100), and each of the support plates(20) is arranged at an end of the adjacent two side surfaces close to an opening end of the oil tank(100), a positioning slot(21) is defined in each of the support plate(20), the positioning insert plates(30) are arranged on an oil tank cover(106), the fixing mechanism connects to the oil tank cover(106) through a connection structure, each of the positioning insert plate(30) comprises a connection portion(31) arranged at an upper end of the positioning insert plate(30) and an inclined portion(32) arranged at a lower end of the positioning insert plate(30), the connection portion(31) comprises a shape matching with the positioning slot(21), a gap is formed between the connection portion(31) and the positioning slot(21),
and the inclined portion(32) forms a slope where a cross-sectional dimension gradually increases from a lower end toward the connection portion(31);
one or more lower positioning assembly, arranged at a lower portion of the oil tank(100) and matching with a body foot(200) of the transformer body, wherein a foot hole(201) is defined on the body foot(200), the lower positioning assembly comprises a base plate(40), a positioning pin(80), a middle plate(50), a top plate(60), a shock-absorbing pad(90), a positioning ring(81), at least one secondary spring(92), and a main spring(91), the base plate(40) is arranged at a bottom(101) of the oil tank(100), the positioning pin(80) is arranged on the base plate(40), the positioning pin(80) passes through the middle plate(50),
the top plate(60), and the shock-absorbing pad(90), the main spring(91) is sleeved on the positioning pin(80), one end of the main spring(91) is connected to the base plate(40), and
another end of the main spring(91) is connected to the top plate(60), the at least one secondary spring(92) is arranged between the middle plate(50) and the top plate(60), the shock-absorbing pad(90) is arranged on the top plate(60), the shock-absorbing pad(90) is arranged below the body foot, the positioning ring(81) is sleeved on a top portion of the positioning pin(80), the top portion of the positioning pin(80) is conical, a conical groove(82) matching with the top portion of the positioning pin(80) is defined inside the positioning ring(81), a top portion of the positioning ring(81) is cone-shaped, and the positioning pin(80) and the positioning ring(81) pass through the foot hole(201).

2. The transformer body positioning structure according to claim 1, **characterized in that**, the support plates(20) comprise four support plates(20), the four support plates(20) are respectively installed at four corners formed by the adjacent two side surfaces of the oil tank(100).

3. The transformer body positioning structure according to claim 1, **characterized in that**, the positioning slot(21) defined in the support plate(20) is a rectangular slot, the connection portion(31) is configured to be rectangular matching with the positioning slot(21), the inclined portion(32) comprises four inclined faces, and the four inclined faces respectively extend from a lower end of the inclined portion(32) to the connection portion(31).

4. The transformer body positioning structure according to claim 3, **characterized in that**, the gap between the positioning slot(21) and the connection portion(31) is 5mm.

5. The transformer body positioning structure according to claim 1, **characterized in that**, a distance between each of the support plate(20) and a top end of corresponding side surface of the oil tank(100) is 60mm-80mm.

6. The transformer body positioning structure according to claim 1, **characterized in that**, the lower positioning assemblies are arranged at both ends of the transformer body foot(200).

7. The transformer body positioning structure according to claim 1, **characterized in that**, the lower positioning assembly further comprises a center column(70) and at least one bolt(53), a first center hole(41) is defined in the base plate(40), the positioning pin(80) is installed in the first center hole(41), the center column(70) is sleeved outside the main spring(91), one end of the center column(70) is connected to the base plate(40), another end of the center column(70) is connected to the middle plate(50), a second center hole(51) and at least one first connection hole(52) are formed in the middle plate(50), the second center hole(51) allows the positioning pin(80) and the main spring(91) to pass through, a third center hole(61) and at least one second connection hole(62) are defined in the top plate(60), the positioning pin(80) passes through the third center hole(61), one end of the at least one bolt(53) is arranged in the at least one second connection hole(62) and another end of the at least one bolt(53) passes through the at least one first connection hole(52), and the at least one secondary spring(92) is sleeved on the at least one bolt(53).

8. The transformer body positioning structure according to claim 7, **characterized in that**, the at least one first connection hole(52) in the middle plate comprises four first connection holes(52), each first connection hole(52) corresponds to one bolt(53) passing through, and each of the at least one secondary spring(92) is sleeved on each bolt(53).

9. The transformer body positioning structure according to claim 7, **characterized in that**, the lower positioning assembly further comprises a nut(54) and a washer(55), the nut(54) matches with a portion of the corresponding bolt(53) extending out of a lower end face of the middle plate(50), and the washer(55) is arranged between the nut(54) and the lower end face of the middle plate(50).

10. A transformer, **characterized in that**, comprising the transformer body positioning structure according to any one of claims 1-9.
